# EUROPÄISCHE PATENTSCHRIFT

(11) **EP 2 978 706 B1**
(45) Veröffentlichungstag und Bekanntmachung des Hinweises auf die Patenterteilung: **30.05.2018**
(21) Anmeldenummer: 14723669.9
(22) Anmeldetag: 25.03.2014
(51) Int. Cl.: B66F 9/07, B60L 9/02, B60L 9/16

(54) **ANORDNUNG UND VERFAHREN ZUM BETRIEB EINES REGALBEDIENGERÄTS**
ARRANGEMENT AND METHOD FOR OPERATING A STORAGE AND RETRIEVAL UNIT
PROCÉDÉ ET AGENCEMENT DE FONCTIONNEMENT D'UN TRANSTOCKEUR

(30) Priorität: 27.03.2013 AT 502112013
(43) Veröffentlichungstag der Anmeldung: 03.02.2016
(73) Patentinhaber: TGW Mechanics GmbH, 4600 Wels (AT)
(72) Erfinder: GROSSE, Eric, 63225 Langen (DE)
(74) Vertreter: Burger, Hannes
(86) Internationale Anmeldenummer: PCT/AT2014/050073
(87) Internationale Veröffentlichungsnummer: WO 2014/153584

(56) Entgegenhaltungen:
- WO-A1-2012/002431
- US-A- 4 892 980

## Beschreibung

Die Erfindung betrifft eine Anordnung, umfassend eine Schienenstrecke, wenigstens eine entlang der Schienenstrecke angeordnete Regalreihe, ein auf der Schienenstrecke fahrbares Regalbediengerät und eine mit der Schienenstrecke elektrisch verbundene Stromversorgung und/oder eine Stromversorgungsschiene, welche in Kontakt mit dem Regalbediengerät steht. Weiterhin betrifft die Erfindung ein Verfahren zum Betrieb der genannten Anordnung, konkret zum Betrieb eines auf einer Schienenstrecke fahrbaren und von einer mit der Schienenstrecke elektrisch verbundenen Stromversorgung und/oder einer Stromversorgungsschiene versorgten Regalbediengeräts, mittels dem wenigstens eine entlang der Schienenstrecke angeordnete Regalreihe zugreifbar ist.

Eine solche Anordnung beziehungsweise ein solches Verfahren sind aus dem Stand der Technik grundsätzlich bekannt. Beispielsweise ist dort die genannte Schienenstrecke in einer Regalgasse zwischen zwei Regalreihen angeordnet, sodass das Regalbediengerät die Regalfächer links und rechts der Schienenstrecke bedienen kann, das heißt Objekte in das Regal einlagern oder Objekte aus diesem auslagern kann. Selbstverständlich können auch mehrere Regalreihen und Schienenstrecken übereinander angeordnet sein, sodass ein Lager mit mehreren Ebenen entsteht. An der Frontseite der Regale, das heißt am Ende einer Schienenstrecke, kann ein Vertikalförderer angeordnet sein. Weiterhin kann am Ende einer Schienenstrecke oder am Vertikalförderer ein Horizontalförderer (z.B. Förderband oder Förderrollen) sowie zum Beispiel ein Kommissionierplatz vorgesehen sein. Eine solche Anordnung ist in der US4892980A offenbart. Obwohl solche Lager in der Regel vollautomatisch über einen zentralen Steuerrechner betrieben werden, ist es von Zeit zu Zeit erforderlich, dass eine Bedienperson eine Lagergasse betritt, um zum Beispiel Wartungsarbeiten am Regalbediengerät, an der Schienenstrecke oder am Regal selbst durchzuführen, beziehungsweise auch um Objekte, die sich beim Manipulieren durch das Regalbediengerät verkeilt haben, zu entfernen. Da die Regalbediengeräte hohe Geschwindigkeiten erreichen und auch eine relativ hohe Masse aufweisen, müssen besondere Sicherungsmaßnahmen ergriffen werden, um die Bedienperson bei Betreten der Regalgasse beziehungsweise Schienenstrecke vor dem Regalbediengerät zu schützen.

Aus der DE 39 15 681 A1 ist dazu eine Anordnung bekannt, bei der mit Hilfe einer Reflexlichtschranke erkannt wird, wenn eine Person die Regalgasse betritt. Als Folge kann zum Beispiel eine Warnhupe, eine Signalleuchte oder eine Schranke betätigt werden.

Die US 2012/0185080 A1 offenbart weiterhin Schranken oder Barrieren, um das Einfahren eine Regalbediengeräts in eine gesicherte Zone der Regalgasse zu verhindern.

Die DE 196 28 123 A1 offenbart zudem das Erkennen einer Person in einer oder nahe einer Regalgasse mit zum Beispiel Lichtschranken. Im Gefahrenfall ist vorgesehen, die Regalbediengeräte in einen langsamen Kriechgang zu steuern oder sogar anzuhalten.

Weiterer Stand der Technik zu dieser Thematik ist in der DE 39 19 167 C1 und der DE 41 12 728 A1 offenbart.

Nachteilig an den bekannten Verfahren ist, dass mehr oder minder singuläre Maßnahmen gesetzt werden, diese jedoch kein Konzept beinhalten, mit dem ein Fahren des Regalbediengeräts im Gefahrenfall wirkungsvoll verhindert, eine Mindestenergieversorgung desselben jedoch sichergestellt wird.

Eine Aufgabe der Erfindung ist es daher, eine verbesserte Anordnung und ein verbessertes Verfahren zum Betrieb eines Regalbediengeräts anzugeben. Insbesondere soll im Gefahrenfall ein Fahren des Regalbediengeräts wirkungsvoll verhindert, eine Mindestenergieversorgung desselben jedoch sichergestellt werden.

Die Aufgabe der Erfindung wird durch ein Verfahren der eingangs genannten Art gelöst, bei der die Schienenstrecke/Stromversorgungsschiene unter eine Gefahrenbetriebsspannung gesetzt wird, deren Gleichrichtwert/Effektivwert unter einem für das Bewegen des Regalbediengeräts notwendigen Mindestgleichrichtwert/Mindesteffektivwert, jedoch über Null liegt, wenn eine durch das Regalbediengerät gebildete Gefährdung festgestellt wird.

Weiterhin wird die Aufgabe der Erfindung mit einem Verfahren der eingangs genannten Art gelöst, bei dem
- die Schienenstrecke/Stromversorgungsschiene im Normalbetrieb unter eine Fahrspannung gesetzt wird, wenn keine durch das Regalbediengerät gebildete Gefährdung festgestellt wird, und unter Gefahrenbetriebsspannung gesetzt wird, wenn eine durch das Regalbediengerät gebildete Gefährdung festgestellt wird, und
- die an die Schienenstrecke/Stromversorgungsschiene angelegte Spannung im Regalbediengerät auf das Vorhandensein eines vordefinierten Charakteristikums hin untersucht wird, und die genannte Spannung nur dann an einen Fahrmotor des Regalbediengeräts weitergeleitet wird, wenn das festgestellte Charakteristikum das Vorliegen der Fahrspannung anzeigt, wobei als Charakteristika
   a) die Fahrspannung ein vordefiniertes erstes Wechselsignal (erstes Pilotsignal) enthält und die Gefahrenbetriebsspannung dieses erste Wechselsignal nicht enthält oder
   b) die Gefahrenbetriebsspannung ein vordefiniertes erstes Wechselsignal (erstes Pilotsignal) enthält und die Fahrspannung dieses erste Wechselsignal nicht enthält oder
   c) die Fahrspannung ein vordefiniertes erstes Wechselsignal (erstes Pilotsignal) enthält und die Gefahrenbetriebsspannung ein vordefiniertes zweites Wechselsignal (zweites Pilotsignal) enthält.

Vorzugsweise kann auch hier der Gleichrichtwert/Effektivwert der Gefahrenbetriebsspannung unter einem für das Bewegen des Regalbediengeräts notwendigen Mindestgleichrichtwert/Mindesteffektivwert, jedoch über Null liegen.

Die Aufgabe der Erfindung wird darüber hinaus mit einer Anordnung der eingangs genannten Art gelöst, welche eine Fahrsteuerung umfasst, die dazu eingerichtet ist, die Schienenstrecke/Stromversorgungsschiene unter eine Gefahrenbetriebsspannung zu setzen, deren Gleichrichtwert/Effektivwert unter einem für das Bewegen des Regalbediengeräts notwendigen Mindestgleichrichtwert/Mindesteffektivwert, jedoch über Null liegt, wenn eine durch das Regalbediengerät gebildete Gefährdung festgestellt wird.

Schließlich wird die Aufgabe der Erfindung auch durch eine Anordnung der eingangs genannten Art gelöst, zusätzlich umfassend
- eine Fahrsteuerung, welche dazu eingerichtet ist, eine durch das Regalbediengerät gebildete Gefährdung festzustellen und die Schienenstrecke/Stromversorgungsschiene im Normalbetrieb bei fehlender Gefährdung unter eine Fahrspannung und bei bestehender Gefährdung unter Gefahrenbetriebsspannung zu setzen, und
- eine Motorsteuerung im Regalbediengerät, welche dazu eingerichtet ist, die an die Schienenstrecke/Stromversorgungsschiene angelegte Spannung im Regalbediengerät auf das Vorhandensein eines vordefinierten Charakteristikums hin zu untersuchen, und die genannte Spannung nur dann an einen Fahrmotor des Regalbediengeräts weiterzuleiten, wenn das festgestellte Charakteristikum das Vorliegen der Fahrspannung anzeigt, wobei als Charakteristika
   a) die Fahrspannung ein vordefiniertes erstes Wechselsignal (erstes Pilotsignal) enthält und die Gefahrenbetriebsspannung dieses erste Wechselsignal nicht enthält oder
   b) die Gefahrenbetriebsspannung ein vordefiniertes erstes Wechselsignal (erstes Pilotsignal) enthält und die Fahrspannung dieses erste Wechselsignal nicht enthält oder
   c) die Fahrspannung ein vordefiniertes erstes Wechselsignal (erstes Pilotsignal) enthält und die Gefahrenbetriebsspannung ein vordefiniertes zweites Wechselsignal (zweites Pilotsignal) enthält.

Durch die vorgestellten Maßnahmen ist es möglich, das Regalbediengerät (im Falle eines Einebenenregalbediengeräts auch "Shuttle" genannt) auch im Gefahrenfall mit elektrischer Energie zu versorgen, beispielsweise um wichtige elektronische Komponenten auch im Gefahrenfall ohne Stützkondensator oder Stützakku in Betrieb zu halten. Beispielsweise kann dies einen Kommunikationsbaustein oder einen Positionsgeber des Regalbediengeräts betreffen, sodass der Normalbetrieb nach einem Gefahrenbetrieb problemlos wieder aufgenommen werden kann. Vorteilhaft ist auch, dass eine Fehleranalyse und Fehlerbehebung am versorgten Regalbediengerät erleichtert wird. Beispielsweise können am Regalbediengerät Fehlercodes angezeigt werden und auch zum Beispiel das Einstellen von Sensoren wird durch die aufrechterhaltene Stromversorgung erleichtert.

Trotz der Energieversorgung des Regalbediengeräts auch im Gefahrenfall gewährleisten die getroffenen Maßnahmen einen wirkungsvollen Schutz einer auf der Schienenstrecke befindlichen Person. Insbesondere wenn der Gleichrichtwert/Effektivwert der Gefahrenbetriebsspannung unter einem für das Bewegen des Regalbediengeräts notwendigen Mindestgleichrichtwert/Mindesteffektivwert liegt, ist ein Fahren des Regalbediengeräts allein schon aus physikalischen Gründen ausgeschlossen. Mit anderen Worten wird dem Fahrmotor des Regalbediengeräts zu wenig Energie zugeführt, als dass dieser das Regalbediengerät bewegen könnte. Der Personenschutz ist daher besonders effektiv.

Der "Effektivwert" wird durch Quadrieren und anschließende Mittelwertbildung errechnet, der "Gleichrichtwert" durch Gleichrichten und anschließende Mittelwertbildung. Bei unipolaren Spannungen entspricht der "Gleichrichtwert" daher gleichzeitig dem (arithmetischen) "Mittelwert".

Primär bezieht sich der Begriff "Fahren" im Rahmen der Erfindung auf die Bewegung des gesamten Regalbediengeräts, also auf ein Fahren desselben auf der Schienenstrecke. "Fahren" kann aber auch auf Teilbereiche des Regalbediengeräts angewandt werden, beispielsweise auf das Aus- und Einfahren respektive allgemein Bewegen einer Hubgabel. Je nach Trägheit der bewegten Einheit und deren Antriebsleistung kommen unterschiedliche Mindestgleichrichtwerte/Mindesteffektivwerte zum Tragen. Angemerkt wird auch, dass der Antrieb nicht notgedrungen elektrisch ist, sondern die elektrische Energie zuvor auch in eine andere Form, zum Beispiel in pneumatische oder hydraulische Energie, umgewandelt werden kann.

Weitere vorteilhafte Ausgestaltungen und Weiterbildungen der Erfindung ergeben sich aus den Unteransprüchen sowie aus der Beschreibung in Zusammenschau mit den Figuren.

Günstig ist es, wenn der Maximalwert der Gefahrenbetriebsspannung betragsmäßig unterhalb der Mindestfahrspannung liegt. Auf diese Weise kann eine noch höhere Sicherheit beim Betrieb des Regalbediengeräts erreicht werden.

Vorteilhaft ist es, wenn die Gefahrenbetriebsspannung in der gleichen Polung wie die Mindestfahrspannung an die Schienenstrecke/Stromversorgungsschiene angelegt wird. Auf diese Weise können besondere Schaltungsmaßnahmen im Regalbediengerät, wie zum Beispiel das Vorsehen eines Gleichrichters, entfallen. Die Motorsteuerung kann daher einfach gehalten werden.

Vorteilhaft ist es aber auch, wenn die Gefahrenbetriebsspannung in einer zur Polung der Mindestfahrspannung entgegengesetzten Polung an die Schienenstrecke/Stromversorgungsschiene angelegt wird. Bei entsprechender Beschaltung des Regalbediengeräts, welche die Weiterleitung der entgegengesetzt gepolten Gefahrenbetriebsspannung an den Motor verhindert, kann die Gefahrenbetriebsspannung an sich beliebig hoch sein. Auf diese Weise können im Gefahrenbetrieb auch Komponenten versorgt werden, welche ein vergleichsweise hohe Spannung benötigen, insbesondere eine Spannung, welche im Mittel über der für das Bewegen des Regalbediengeräts notwendigen Mindestfahrspannung liegt. Gegebenenfalls können im Regalbediengerät elektrische Energiespeicher (z.B. Akkumulatoren oder Kondensatoren) vorgesehen sein, um die für das Umpolen der Spannung nötige Zeit zu überbrücken.

Günstig ist es, wenn die Gefahrenbetriebsspannung im Wesentlichen nur einen Gleichanteil aufweist, das heißt im Wesentlichen als Gleichspannung ausgebildet ist. Auf diese Weise kann die Fahrsteuerung besonders einfach und robust gehalten werden. Ausfälle und Störungen derselben können daher weitgehend vermieden werden.

Günstig ist es auch, wenn die Gefahrenbetriebsspannung im Wesentlichen nur einen Wechselanteil aufweist. Insbesondere bei Verwendung eines Gleichstrommotors und einer im Vergleich zur Trägheit des Regalbediengeräts hinreichend hohen Frequenz der Gefahrenbetriebsspannung kann ein Losfahren des Regalbediengeräts auch ohne besondere Schaltungsmaßnahmen im Regalbediengerät verhindert werden. Dies deswegen, weil die Gefahrenbetriebsspannung ja in diesem Fall im Mittel keinen Gleichanteil aufweist, welcher für das Bewegen eines Gleichstrommotors nötig wäre.

Günstig ist es zudem, wenn die Gefahrenbetriebsspannung einen Gleichanteil und einen Wechselanteil aufweist. Auf diese Weise kann ein Anteil derselben als Steuersignal verwendet werden. Beispielsweise kann das in der Gefahrenbetriebsspannung enthaltene Wechselsignal als Steuersignal für das Regalbediengerät verwendet werden. Denkbar ist aber auch, den Gleichanteil für diesen Zweck einzusetzen.

Günstig ist es darüber hinaus, wenn das genannte Wechselsignal sinusförmig verläuft oder als Digitalsignal ausgebildet ist. Ein sinusförmiges Wechselsignal kann besonders einfach in die Fahrspannung eingekoppelt beziehungsweise wieder aus dieser ausgekoppelt werden. Beispielsweise kann im Regalbediengerät dazu ein Trafo oder ein Filter vorgesehen sein. Mit Hilfe eines Digitalsignals lassen sich auch komplexe Steuerbefehle an das Regalbediengerät übertragen. Zudem ist es weitgehend störunempfindlich. Beispielsweise kann dazu das Frequency-Hopping-Verfahren oder das Spread-Spektrum-Verfahren angewandt werden, um Steuerbefehle mit hoher Datensicherheit zu übertragen.

Vorteilhaft ist es schließlich, wenn ein im Regalbediengerät von der Fahrspannung ausgekoppelter Wechselspannungsanteil (z.B. der gesamte Wechselanteil oder ein bestimmter Frequenzanteil desselben) auf die Steuerspule eines Relais geschaltet wird und dieses in einem Schaltzustand hält, wobei das Relais zum Trennen der Fahrspannung vom Fahrmotor eingerichtet ist. Insbesondere kann der Wechselanteil über einen Trafo und/oder einen Filter ausgekoppelt werden und gegebenenfalls anschließend gleichgerichtet werden. Je nachdem ob die an das Regalbediengerät angelegte Fahrspannung einen Wechselanteil (insbesondere mit einer bestimmten Frequenz) aufweist, kann das Relais geöffnet oder geschlossen werden und solcherart der Motor angesteuert werden. Besonders vorteilhaft ist es, wenn diese Maßnahme als zusätzliche Maßnahme zu einer anderen Sicherungsmaßnahme eingesetzt wird.

An dieser Stelle wird angemerkt, dass sich die zum erfindungsgemäßen Betriebsverfahren genannten Varianten und die sich daraus ergebenden Vorteile gleichermaßen auf die vorgestellte erfindungsgemäße Anordnung beziehen und umgekehrt.

Zum besseren Verständnis der Erfindung wird diese anhand der nachfolgenden Figuren näher erläutert. Es zeigen:
- Fig. 1: eine beispielhafte und schematisch dargestellte Regalanordnung mit einem dazwischen fahrenden Regalbediengerät;
- Fig. 2: eine beispielhafte und schematisch dargestellte Fahrsteuerung zum Absenken der Fahrspannung im Gefahrenfall;
- Fig. 3: eine beispielhafte und schematisch dargestellte Fahrsteuerung zum Umpolen der Fahrspannung im Gefahrenfall;
- Fig. 4: eine beispielhafte und schematisch dargestellte Motorsteuerung zum Betrieb des Regalbediengeräts mit einer umgepolten Gefahrenbetriebsspannung;
- Fig. 5: eine beispielhafte und schematisch dargestellte Fahrsteuerung zum Aufmodulieren eines Wechselsignals auf die Fahrspannung;
- Fig. 6: eine beispielhafte Fahrspannung mit Gleichanteil und sinusförmigen Wechselanteil;
- Fig. 7: eine beispielhafte Fahrspannung ohne Gleichanteil mit sinusförmigem Wechselanteil aufmoduliert auf eine sinusförmige Grundwelle;
- Fig. 8: eine beispielhafte Fahrspannung mit Gleichanteil und aufmoduliertem Digitalsignal;
- Fig. 9: eine beispielhafte und schematisch dargestellte Motorsteuerung zum Dekodieren eines aufmodulierten Wechselsignals und
- Fig. 10: eine beispielhafte und schematisch dargestellte Motorsteuerung, bei der ein Relais im Motorstromkreis durch einen Wechselanteil in der Fahrspannung in einem Schaltzustand gehalten wird.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

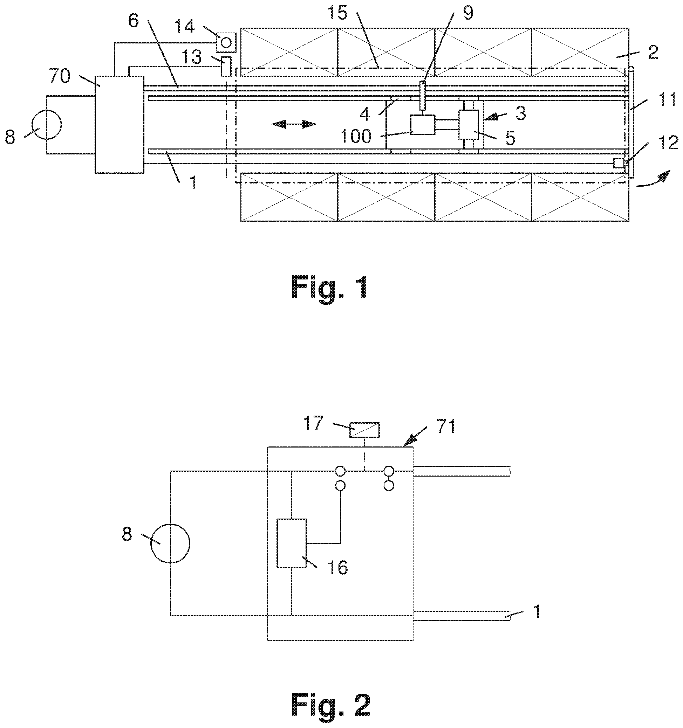

Fig. 1 zeigt eine Anordnung mit einer Schienenstrecke 1, wenigstens einer entlang der Schienenstrecke 1 angeordnete Regalreihe 2 und einem auf der Schienenstrecke 1 fahrbaren Regalbediengerät 3. Das Regalbediengerät 3 weist dazu Räder 4 und einen Antriebsmotor 5 auf. Weiterhin umfasst die Anordnung eine Stromversorgungsschiene 6 und eine damit elektrisch verbundene Fahrsteuerung 70, welche wiederum mit einer Stromversorgung/Spannungsquelle 8 verbunden ist. Im gezeigten Beispiel wird die Versorgungsspannung über einen Schleifkontakt 9 von der Stromversorgungsschiene 6 abgenommen und an eine Motorsteuerung 100 weitergeleitet, welche den Antriebsmotor 5 ansteuert und auch weitere Steueraufgaben wie zum Beispiel das Ein- und Auslagern von Lagerbehältern in das oder aus dem Regal 2 übernehmen kann. In der Fig. 1 ist die Stromversorgungsschiene 6 neben der Schienenstrecke 1 angeordnet, selbstverständlich kann die Stromversorgungsschiene 6 auch innerhalb der Schienenstrecke 1 angeordnet sein. Das rechte Ende der Regalgasse ist in diesem Beispiel mit einer Tür 11 verschlossen, deren Schließzustand mit einem mit der Fahrsteuerung 70 verbundenen Schalter 12 überwacht wird. Schließlich umfasst die gezeigte Anordnung exemplarisch auch noch eine Lichtschranke 13 sowie einen Taster 14, welche mit der Fahrsteuerung 70 verbunden sind.

Die Funktion der in der Fig. 1 gezeigten Anordnung ist nun wie folgt.

Im Normalbetrieb empfängt das Regalbediengerät 3 von einer nicht dargestellten übergeordneten Steuerung Befehle, um Objekte von einem Übergabeplatz aufzunehmen und in das Regal einzulagern oder Objekte aus diesem auszulagern und diese am Übergabeplatz abzugeben. Übergabeplätze können dabei jeweils an den Enden der Schienenstrecke 1 vorgesehen sein. Dort kann auch eine Vertikalfördereinrichtung vorgesehen sein, sodass mehrere Schienenstrecken 1 übereinander angeordnet sein können und solcherart ein Lager mit mehreren Ebenen bilden. Denkbar ist auch, dass am Übergabeplatz respektive an der Vertikalfördereinrichtung eine Horizontalfördereinrichtung (z.B. Förderbänder oder Förderrollen) angeordnet ist, um die Objekte entsprechend zu- oder abzufördern. Denkbar ist auch, dass am Übergabeplatz respektive an der Vertikalfördereinrichtung ein Kommissionierarbeitsplatz angeordnet ist.

Im Normalbetrieb operiert das Regalbediengerät 3 völlig automatisch. In bestimmten Situationen kann aber die Intervention einer Bedienperson erforderlich sein, beispielsweise wenn sich Objekte verkeilen, das Regalbediengerät 3 defekt ist oder der Förderfluss auf andere Weise gestört ist. Da sich das Regalbediengerät 3 mit relativ hoher Geschwindigkeit bewegt, muss die Bedienperson geschützt werden, wenn sie die Regalgasse respektive die Schienenstrecke 1 betritt. Zu diesem Zweck drückt sie den Taster 14, woraufhin das Regalbediengerät 3 stillgesetzt wird. Zusätzlich wird der Eingang zur Regalgasse auch durch die Lichtschranke 13 überwacht. Als zusätzlicher Schutz befindet sich am rechten Ende der Regalgasse die Tür 11, welche mit dem Schalter 12 überwacht wird. Auf diese Weise ergibt sich eine Schutzzone 15. Zusätzlich kann auch ein Schutzzaun um die Regale 2 angeordnet werden.

Wird das Betreten der Regalgasse durch eine Person detektiert, sei es von links oder rechts, so wird das Regalbediengerät 3 automatisch, das heißt auch ohne dass dazu der Taster 14 explizit gedrückt werden muss, stillgelegt. In der Fig. 1 sind beide Seiten der Regalgasse überwacht. Selbstverständlich ist es auch möglich, lediglich eine der Seiten der Regalgasse mit einer Lichtschranke 13 und/oder einem Taster 14 und/oder einer Tür 11 mit Schalter 12 auszustatten. Denkbar ist weiterhin, dass alternativ oder zusätzlich noch andere Sicherungsmaßnahmen ergriffen werden, wie zum Beispiel das Betätigen von Schranken oder die Überwachung mit anderen Sensoren, zum Beispiel Näherungssensoren oder Videokameras.

Die Fahrsteuerung 70 setzt die Schienenstrecke 1/Stromversorgungsschiene 6 nun unter eine Gefahrenbetriebsspannung, deren Gleichrichtwert/Effektivwert unter einem für das Bewegen des Regalbediengeräts 3 notwendigen Mindestgleichrichtwert/Mindesteffektivwert, jedoch über Null liegt, wenn eine durch das Regalbediengerät 3 gebildete Gefährdung festgestellt wird, das heißt wenn der Taster 14 gedrückt wird oder die Lichtschranke 13 beziehungsweise der Schalter 12 ein Betreten der Regalgasse meldet. Vorteilhaft kann auf diese Weise eine Steuerelektronik des Regalbediengeräts 3, zum Beispiel die Fahrsteuerung, nach wie vor elektrisch versorgt werden, obwohl das Regalbediengerät 3 aufgrund der niedrigen Spannung bewegungsunfähig ist. Das Spannungsniveau kann dabei so gewählt werden, dass es unterhalb der Anfahrspannung liegt und das stillstehende Regalbediengerät 3 nicht mehr losfahren kann, oder es kann sogar unter der Fahrspannung liegen, sodass auch ein sich bewegendes Regalbediengerät 3 anhält. Beispielsweise kann die Spannung im Normalbetrieb kleiner gleich 100V betragen und insbesondere bei 70V, bei 24V oder 48V liegen, wohingegen die Gefahrenbetriebsspannung beispielsweise kleiner gleich 24V betragen kann und insbesondere bei 5V oder 12V liegt, was für die Versorgung elektronischer Komponenten üblicherweise ausreichend ist. Denkbar wäre auch, dass nur wichtige Schaltkreise für den Betrieb durch die Gefahrenbetriebsspannung ausgelegt sind, andere Schaltkreise inklusive dem Motor 5 aber stillgelegt werden. Beispielsweise kann vorgesehen sein, dass Positionsgeber und Kommunikationsbausteine auch bei Anlegen nur der Gefahrenbetriebsspannung weiterhin uneingeschränkt arbeiten, sodass eine reibungslose Wiederaufnahme des Normalbetriebs nach einem Gefahrenbetrieb gewährleistet ist.

Durch die Trägheit des Regalbediengeräts 3 ist es in der Regel ausreichend, wenn der Gleichrichtwert/Effektivwert der Gefahrenbetriebsspannung unter einem für das Bewegen des Regalbediengeräts 3 notwendigen Gleichrichtwert/Effektivwert der Fahrspannung liegt. Für eine noch höhere Sicherheit kann aber auch vorgesehen sein, dass der Maximalwert der Gefahrenbetriebsspannung betragsmäßig unterhalb der Mindestfahrspannung liegt.

Die Fig. 2 zeigt nun ein konkretes Beispiel für eine Fahrsteuerung 71, welche einen Spannungskonverter 16 und einen Umschalter 17 umfasst. Der Spannungskonverter 16 wandelt die von der Stromversorgung/Spannungsquelle 8 gelieferte Spannung auf ein niedrigeres Niveau, beispielsweise von 70V auf 24V. Mit Hilfe des Umschalters 17 kann die von der Spannungsquelle 8 gelieferte Spannung direkt auf die Stromversorgungsschiene 6 geschaltet werden (siehe dargestellter Zustand), oder es wird auf das niedrigere Spannungsniveau umgeschaltet.

In dem in Fig. 2 dargestellten Beispiel weist die Gefahrenbetriebsspannung die gleiche Polung auf wie die Mindestfahrspannung. Denkbar ist aber auch, dass die Gefahrenbetriebsspannung in einer zur Polung der Mindestfahrspannung entgegengesetzten Polung an die Stromversorgungsschiene 6 angelegt wird.

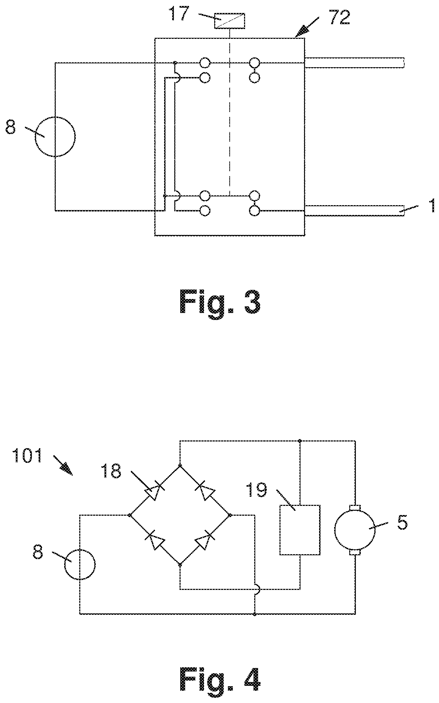

Fig. 3 zeigt dazu ein Beispiel einer Fahrsteuerung 72, bei der die von der Spannungsquelle 8 gelieferte Spannung direkt auf die Stromversorgungsschiene 6 geschaltet werden kann, jedoch je nach Stellung des Umschalters 17 in unterschiedlicher Polung. Um den gewünschten Zweck zu erzielen, nämlich das Regalbediengerät 3 zwar stillzulegen, wichtige Komponenten aber dennoch noch mit elektrischer Spannung zu versorgen, kann im Regalbediengerät 3 die in der Fig. 4 dargestellte Schaltung vorgesehen sein.

Die Fig. 4 zeigt ein Beispiel für eine Motorsteuerung 101, bei welcher der Motor 5 über eine Diode 18 mit der Spannungsquelle 8 verbunden ist. Die Diode 18 ist aber auch Teil eines Vollweg-Brückengleichrichters, welcher die Schaltung 19 versorgt. Die Schaltung 19 kann wichtige Komponenten wie zum Beispiel einen Positionsgeber und Kommunikationsbausteine enthalten. Im Normalbetrieb (siehe die in der Fig. 3 dargestellte Schaltstellung des Umschalters 17) ist die Diode 18 leitend und der Motor 5 wird mit Strom versorgt. Auch die Schaltung 19 wird über den Gleichrichter mit Strom versorgt. Wird die Spannung auf der Stromversorgungsschiene 6 umgepolt, so sperrt die Diode 18, wodurch der Motor 5 nicht mehr mit Strom versorgt wird. Wegen des Gleichrichters wir die Schaltung 19 aber selbst bei umgepolter Spannung noch mit elektrischer Energie versorgt. Die Fig. 4 soll dabei nur das grundlegende Prinzip verdeutlichen. Selbstverständlich kann hinter der Diode 18 noch ein Umschalter für den Motor 5 angeordnet sein, mit dessen Hilfe die Drehrichtung des Motors 5 bei leitender Diode 18 umgekehrt werden kann.

Bei der in den Figuren 3 und 4 dargestellten Kombination kann die Gefahrenbetriebsspannung als Gleichspannung (d.h. im Wesentlichen nur einen Gleichanteil aufweisend) ausgelegt sein, wobei die Gleichspannung mit jeweils unterschiedlicher Polung an die Stromversorgungsschiene 6 angelegt wird.

Denkbar wäre aber auch, dass die Fahrspannung im Normalbetrieb eine Gleichspannung ist und die Gefahrenbetriebsspannung im Wesentlichen nur einen Wechselanteil aufweist, das heißt eine Wechselspannung ist. Auch in diesem Fall würde die Schaltung 19 in beiden Betriebsfällen mit elektrischer Energie versorgt werden, wohingegen der Motor 5 nur bei jeder zweiten Halbwelle der Wechselspannung mit elektrischer Energie versorgt wird. Im Mittel sinkt die Spannung daher auf einen niedrigeren Wert ab. Denkbar wäre auch, den Motor 5, welcher für die folgende Betrachtung als Gleichspannungsmotor vorausgesetzt wird, direkt, also ohne Zwischenschaltung der Diode 18 mit der Spannungsquelle 8 zu verbinden. Dadurch dass die Gefahrenbetriebsspannung im Wesentlichen keinen Gleichanteil aufweist, bleibt der Motor 5 bei hinreichend hoher Frequenz der Gefahrenbetriebsspannung aufgrund seiner Trägheit einfach stehen, wohingegen die Schaltung 19 weiterhin mit elektrischer Energie versorgt wird.

Denkbar wäre schließlich auch, dass in der Fahrsteuerung 72 in den Pfad für die Gefahrenbetriebsspannung eine zusätzliche Sicherung eingebaut ist, die für den Strom zur Versorgung des Regalbediengeräts 3 im Gefahrenfall, nicht jedoch für den Motorstrom des Motors 5 ausgelegt ist. Dadurch kann verhindert werden, dass sich das Regalbediengerät 3 in Bewegung setzt, wenn die Diode 18 durchbricht und leitend wird. Tritt dieser Fall ein, so würde die erwähnte Sicherung in der Fahrsteuerung 72 auslösen und ein Bewegen des Regalbediengeräts 3 verhindern.

Eine weitere Möglichkeit zur Sicherung der Regalgasse besteht darin,
- dass die Stromversorgungsschiene 6 im Normalbetrieb unter eine Fahrspannung gesetzt wird, wenn keine durch das Regalbediengerät 3 gebildete Gefährdung festgestellt wird, und unter Gefahrenbetriebsspannung gesetzt wird, wenn eine durch das Regalbediengerät 3 gebildete Gefährdung festgestellt wird, und
- dass die an die Stromversorgungsschiene 6 angelegte Spannung im Regalbediengerät 3 auf das Vorhandensein eines vordefinierten Charakteristikums hin untersucht wird, und die genannte Spannung nur dann an einen Fahrmotor 5 des Regalbediengeräts 3 weitergeleitet wird, wenn das festgestellte Charakteristikum das Vorliegen der Fahrspannung anzeigt, wobei als Charakteristika
   a) die Fahrspannung ein vordefiniertes erstes Wechselsignal (erstes Pilotsignal) enthält und die Gefahrenbetriebsspannung dieses erste Wechselsignal nicht enthält oder
   b) die Gefahrenbetriebsspannung ein vordefiniertes erstes Wechselsignal (erstes Pilotsignal) enthält und die Fahrspannung dieses erste Wechselsignal nicht enthält oder
   c) die Fahrspannung ein vordefiniertes erstes Wechselsignal (erstes Pilotsignal) enthält und die Gefahrenbetriebsspannung ein vordefiniertes zweites Wechselsignal (zweites Pilotsignal) enthält.

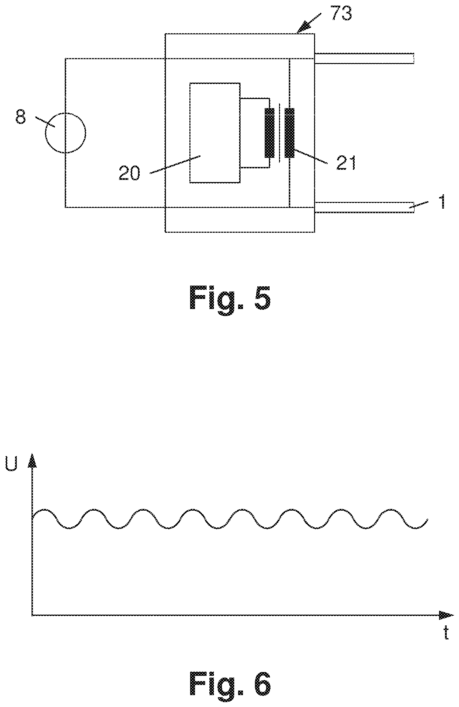

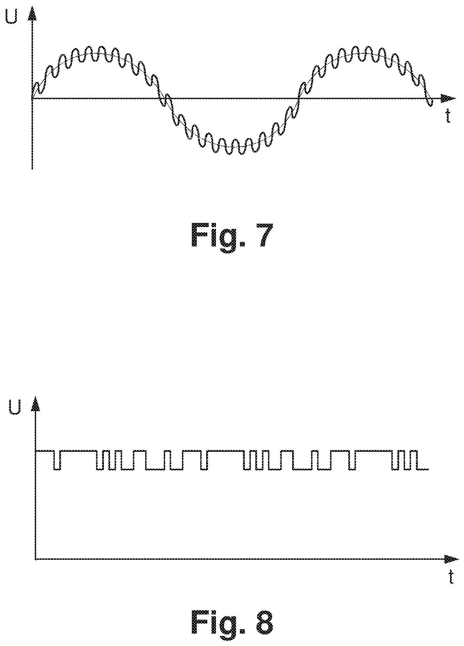

Die Fig. 5 zeigt dazu ein Beispiel einer Fahrsteuerung 73, bei der mit Hilfe eines Modulators 20 und eines Koppeltrafos 21 ein Signal auf die Spannung der Spannungsquelle 8 aufmoduliert werden kann. Beispielsweise kann der Modulator 20 ein Sinussignal erzeugen, das mit Hilfe des Koppeltrafos 21 auf eine von der Spannungsquelle 8 gelieferte Gleichspannung aufmoduliert wird. Fig. 6 zeigt dazu ein Beispiel für die resultierende Spannung. Denkbar wäre auch, dass die Spannungsquelle 8 eine Wechselspannung liefert, auf die eine Wechselspannung mit höherer Frequenz aufmoduliert wird. Fig. 7 zeigt dazu ein Beispiel für die resultierende Spannung. Weiterhin wäre auch denkbar, dass der Modulator 20 einen Digitalcode erzeugt, welcher auf eine von der Spannungsquelle 8 gelieferte Gleichspannung aufmoduliert wird. Fig. 8 zeigt dazu ein Beispiel für die resultierende Spannung. Analog zur Fig. 7 wäre auch vorstellbar, dass das Digitalsignal auf eine Wechselspannung aufmoduliert wird.

Das aufmodulierte Sinussignal weist in den gezeigten Beispielen eine konstante Frequenz und eine konstante Amplitude auf. Dies ist natürlich nicht zwingend der Fall. Denkbar wäre auch, dass die Frequenz und/oder Amplitude des aufmodulierten Sinussignals veränderlich ist, das heißt das Sinussignal frequenz- und/oder amplitudenmoduliert ist. Zudem können Signale generell unipolar oder bipolar überlagert werden, das heißt ausgehend von einer Grundspannung nur eine Polarität aufweisen oder eben beide.

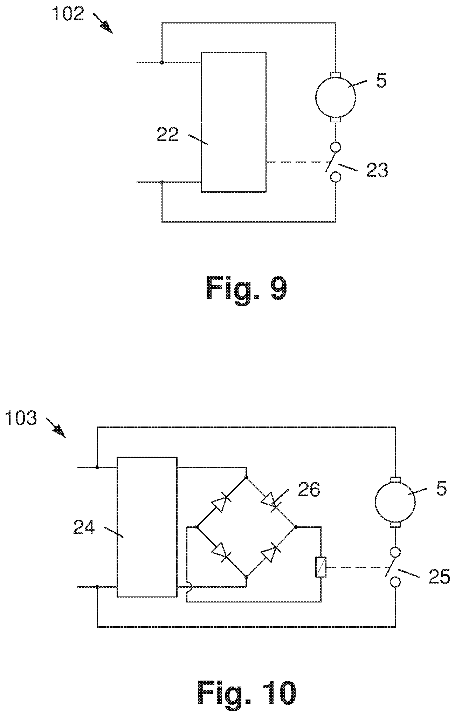

Diese in der Versorgungsspannung für das Regalbediengerät 3 enthaltenen Anteile können nun dazu genützt werden, das Regalbediengerät 3 im Gefahrenfall stillzusetzen. Die Fig. 9 zeigt dazu ein Beispiel für eine Motorsteuerung 102, welche einen Decoder 22 und einen mit dem Decoder 22 angesteuerten Schalter 23 im Motorstromkreis umfasst.

In einem ersten Beispiel wird nun angenommen, dass die Fahrspannung das in Fig. 8 vordefinierte Digitalsignal enthält, die Gefahrenbetriebsspannung dieses erste Digitalsignal aber nicht enthält (Fall a). Das heißt, die Fahrsteuerung 73 moduliert das Digitalsignal nur dann auf die Versorgungsspannung auf, wenn keine Gefährdung vorliegt. Dementsprechend hält der Decoder 22 den Schalter 23 solange geschlossen, solange er das vereinbarte Digitalsignal in der Versorgungsspannung feststellen kann. Kann er dieses nicht mehr detektieren, so liegt eine Gefährdung durch das Regalbediengerät 3 vor und der Schalter 23 wird dementsprechend geöffnet.

Denkbar wäre aber auch dass die Gefahrenbetriebsspannung das vordefinierte Digitalsignal enthält und die Fahrspannung dieses Digitalsignal nicht enthält (Fall b). Die Gefahrenbetriebsspannung weist also einen Gleichanteil und einen Wechselanteil auf. In diesem Fall sind die oben angeführten Verhältnisse lediglich umgekehrt, sodass der Schalter 23 solange offen bleibt, solange der Decoder 22 das vereinbarte Digitalsignal in der Versorgungsspannung feststellen kann.

Schließlich wäre auch vorstellbar, dass die Fahrspannung ein vordefiniertes erstes Digitalsignal enthält und die Gefahrenbetriebsspannung ein vordefiniertes zweites, anderes Digitalsignal enthält. Der Schalter 23 bleibt in diesem Fall solange offen, solange der Decoder 22 das vereinbarte zweite Digitalsignal in der Versorgungsspannung feststellen kann. Stellt der Decoder 22 dagegen das erste Digitalsignal in der Versorgungsspannung fest, so wird der Schalter 23 geschlossen.

Selbstverständlich muss für das oben dargestellte Sicherungsverfahren nicht zwingend ein Digitalsignal aufmoduliert werden, sondern es können auch sinusförmige Wechselsignale aufmoduliert werden (siehe Fig. 6 und 7). Diese können mit Hilfe einer Digitalschaltung detektiert werden, an sich kann als Decoder 22 aber auch ein aktiver oder passiver Filter vorgesehen werden oder der Decoder 22 kann einen solchen enthalten.

Generell ist es für die Erfindung nicht zwingend, dass das Wechselsignal im Normalbetrieb respektive im Gefahrenbetrieb ständig aufmoduliert beziehungsweise ständig überwacht wird. Denkbar ist auch, dass das Aufmodulieren und Überwachen lediglich periodisch ausgeführt wird.

Zur Erhöhung der Sicherheit kann auch das Zweikanal-Prinzip angewendet werden, bei dem für einen Schaltbefehl an den Schalter 23 zwei oder mehrere voneinander unabhängige Einheiten beteiligt werden. Der Motor 5 wird dabei nur dann mit der Fahrspannung versorgt, wenn alle oder wenigstens die Mehrheit der genannten Einheiten zu derselben Entscheidung (Schalter 23 aus oder ein) gelangen. Besonders vorteilhaft ist es dabei, wenn die Einheiten verschieden aufgebaut sind oder von unterschiedlichen Herstellern kommen. Beispielsweise könnten anstelle des einzigen Decoders 22 in Fig. 9 zwei oder mehr Decoder mit dem Schalter verbunden sein, insbesondere über eine UND-Verknüpfung.

Fig. 10 zeigt nun ein Beispiel für eine Motorsteuerung 103, bei der ein Wechselspannungsanteil der Fahrspannung mit Hilfe eines Auskopplers 24 im Regalbediengerät 3 ausgekoppelt und über den Gleichrichter 26 auf die Steuerspule eines Relais 25 zum Trennen der Fahrspannung vom Fahrmotor 5 geschaltet wird. Dieses wird dadurch in einem Schaltzustand gehalten. Im Fall a) würde also der in der Fahrspannung enthaltene Wechselanteil dazu führen, dass an der Steuerspule des Relais 25 eine Spannung anliegt und dieses geschlossen hält. Fällt der Wechselanteil bei Umschalten in die Gefahrenbetriebsspannung weg, so fällt das Relais 25 ab und der Motor 5 wird von der Fahrspannung getrennt. Das Relais 25 ist in diesem Fall also als Schließer ausgebildet. Im Fall b) liegen dementsprechend umgekehrte Verhältnisse vor, sodass das Relais 25 als Öffner ausgebildet wird.

Beispielsweise könnte der Auskoppler 24 als Trafo ausgebildet sein und somit der gesamte Wechselanteil der Fahrspannung ausgekoppelt und über den optionalen Gleichrichter 26 zur Steuerspule des Relais 25 geführt werden. Denkbar wäre auch, dass der Auskoppler als Filter ausgebildet ist und somit nur ein bestimmter Frequenzanteil aus der Fahrspannung ausgekoppelt wird. Dies ist insbesondere im Fall c) von Vorteil, bei dem ja sowohl die Fahrspannung als auch die Gefahrenbetriebsspannung einen Wechselanteil aufweisen. Ist das Relais 25 als Schließer ausgebildet, so wird der Filter 24 auf die Frequenz des in der Normalbetriebs-Fahrspannung enthaltenen Wechselanteils ausgelegt. Ist das Relais 25 dagegen als Öffner ausgebildet, so wird der Filter 24 auf die Frequenz des in der Gefahrenbetriebsspannung enthaltenen Wechselanteils ausgelegt. Selbstverständlich können Trafo und Filter auch kombiniert werden.

Generell ist auch vorstellbar, dass der Motor 5 unterhalb eines bestimmten Spannungsniveaus, insbesondere bei Vorliegen der Gefahrenbetriebsspannung, von der an das Regalbediengerät 3 angelegten Spannung weggeschaltet wird. Beispielsweise kann dazu die in Fig. 9 offenbarte Schaltungsstruktur verwendet werden, wobei aber anstelle des Decoders 22 jedoch beispielsweise ein Spannungskomparator vorgesehen ist. Sinkt die an das Regalbediengerät 3 angelegte Spannung unter das am Komparator eingestellte Niveau, so wird der Schalter 23 geöffnet. Dadurch kann eine erhöhte Sicherheit erzielt werden, da dann auch unerwartete Spannungsspitzen in der Gefahrenbetriebsspannung nicht zu einem (An)fahren des Regalbediengeräts 3 führen können. Diese Vorgangsweise ist also auch dann von Vorteil, wenn die Gefahrenbetriebsspannung (im Regelfall) an sich nicht für eine Bewegung des Regalbediengeräts 3 ausreichend ist. Der Schalter 23 bleibt selbstverständlich auch bei einem (zufälligen) Ansteigen der Spannung geschlossen und wird erst wieder geöffnet, wenn ein expliziter Befehl dazu gegeben wird, beispielsweise indem die Bedienperson das Regalbediengerät nach behobener Störung wieder freischaltet. Soll für eine weiter erhöhte Sicherheit das Mehrkanal-Prinzip angewendet werden, so können auch zwei oder mehr Komparatoren am Schaltvorgang beteiligt sein.

Die Ausführungsbeispiele zeigen mögliche Ausführungsvarianten von Fahrsteuerungen 70..73 und Motorsteuerungen 100..103, wobei an dieser Stelle bemerkt sei, dass die Erfindung nicht auf die speziell dargestellte Ausführungsvarianten derselben eingeschränkt sind, sondern ein Variationsmöglichkeit aufgrund der Lehre zum technischen Handeln durch gegenständliche Erfindung im Können des auf diesem technischen Gebiet tätigen Fachmannes liegt.

Insbesondere könnend die dargestellten Varianten beliebig kombiniert werden. Beispielsweise können für die Fahrsteuerung 70 die in der Fig. 2 dargestellte Variante und die in der Fig. 5 dargestellte Variante kombiniert werden, sodass die Gefahrenbetriebsspannung gegenüber der Normalbetriebsspannung abgesenkt und zusätzlich auch ein Wechselsignal auf die Fahrspannung aufmoduliert wird. Denkbar wäre auch, die in der Fig. 3 dargestellte Variante und die in der Fig. 5 dargestellte Variante zu kombinieren, sodass die Gefahrenbetriebsspannung gegenüber der Normalbetriebsspannung umgepolt und zusätzlich auch ein Wechselsignal auf die Fahrspannung aufmoduliert wird. Dementsprechend können für die Motorsteuerung 100 die in der Fig. 4 dargestellte Variante und die in der Fig. 9 dargestellte Variante kombiniert werden. Dadurch kann eine erhöhte Sicherheit für den Betrieb des Regalbediengeräts 3 erzielt werden.

Aus demselben Grund ist es auch vorstellbar, für die Motorsteuerung 100 die in der Fig. 9 dargestellte Variante und die in der Fig. 10 dargestellte Variante zu kombinieren. Der Decoder 22 könnte die Fahrspannung auf einen enthaltenen Digitalcode hin analysieren, während der Auskoppler 24 lediglich den vom Digitalsignal verursachten Wechselanteil aus der Fahrspannung auskoppelt und damit das Relais 25 offen beziehungsweise geschlossen hält. Auf diese Weise wird das Vorliegen eines Gefahrenzustands auf zwei verschiedene Arten festgestellt, wodurch höhere Sicherheit erzielt werden kann.

Selbstverständlich ist es auch vorstellbar, alle drei in den Figuren 4, 9 und 10 dargestellten Varianten zu kombinieren, wodurch eine noch höhere Sicherheit beim Betrieb des Regalbediengeräts 3 erreicht werden kann.

Generell wurden die Ausführungsbeispiele anhand eines Gleichstrommotors erläutert. Die Fahrspannung kann in diesem Fall einen Gleichanteil und optional einen Wechselanteil aufweisen. Die Erfindung ist aber uneingeschränkt natürlich auch für Wechselstrommotoren und Drehstrommotoren anwendbar. Beispielsweise kann hier die Gefahrenbetriebsspannung gegenüber der Fahrspannung im Normalbetrieb abgesenkt werden, oder es kann ein Wechselsignal auf die Fahrspannung aufmoduliert werden (siehe auch Fig. 7). An dieser Stelle wird auch angemerkt, dass die Stromversorgungsschiene 6 mehrere gegeneinander isolierte Leiter umfassen kann, insbesondere je einen für das positive und negative Potential respektive Masse (Gleichspannung) beziehungsweise je einen pro Phase und gegebenenfalls für Nullleiter (Wechselspannung).

Weiterhin wurde das Regalbediengerät 3 in den Beispielen in lediglich horizontaler Richtung verfahrbar dargestellt. Die ist jedoch nicht zwingend. Das Regalbediengerät 3 kann auch vertikal, schräg, sowie horizontal und vertikal verfahren. Letzteres wird beispielsweise durch einen horizontal verschiebbaren Lift mit Hubgabel gebildet.

Darüber hinaus wird angemerkt, dass die in den Figuren aus Gründen des leichteren Verständnisses verwendeten (mechanischen) Schalter 17, 23 und 25 gleichwertig durch elektronische Schalter ersetzt werden können. Beispielsweise können in der Fig. 9 anstelle des Schalters 18 auch Transistoren, insbesondere FETs oder IGBTs eingesetzt werden.

Insbesondere wird auch festgehalten, dass die dargestellten Steuerungen und die Lageranordnung in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Fahrsteuerungen 70..73, Motorsteuerungen 100..103 und die Anordnung aus Fig. 1 sowie ihre Bestandteile zum besseren Verständnis ihres Aufbaus darüber hinaus teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 1: Schienenstrecke
- 2: Regal
- 3: Regalbediengerät
- 4: Rad
- 5: Antriebsmotor
- 6: Stromversorgungsschiene
- 70..73: Fahrsteuerung
- 8: Spannungsquelle/Energieversorgung
- 9: Schleifkontakt
- 100..103: Motorsteuerung
- 11: Tür
- 12: Schalter
- 13: Lichtschranke
- 14: Taster
- 15: Schutzzone
- 16: Spannungskonverter
- 17: Umschalter
- 18: Diode
- 19: elektronische Schaltung
- 20: Modulator
- 21: Transformator
- 22: Dekoder/Demodulator
- 23: Schalter
- 24: Auskoppler
- 25: Relais
- 26: Gleichrichter
- U: Spannung
- t: Zeit

## Patentansprüche

1. Verfahren zum Betrieb eines auf einer Schienenstrecke (1) fahrbaren und von einer mit der Schienenstrecke (1) elektrisch verbundenen Stromversorgung (8) und/oder einer Stromversorgungsschiene (6) versorgten Regalbediengeräts (3), mittels dem wenigstens eine entlang der Schienenstrecke (1) angeordnete Regalreihe (2) zugreifbar ist,
**dadurch gekennzeichnet, dass**
die Schienenstrecke (1)/Stromversorgungsschiene (6) unter eine Gefahrenbetriebsspannung gesetzt wird, deren Gleichrichtwert/Effektivwert unter einem für das Bewegen des Regalbediengeräts (3) notwendigen Mindestgleichrichtwert/Mindesteffektivwert, jedoch über Null liegt, wenn eine durch das Regalbediengerät (3) gebildete Gefährdung festgestellt wird.

2. Verfahren nach Anspruch 1,
**dadurch gekennzeichnet,**
- **dass** die Schienenstrecke (1)/Stromversorgungsschiene (6) im Normalbetrieb unter eine Fahrspannung gesetzt wird, wenn keine durch das Regalbediengerät (3) gebildete Gefährdung durch das Regalbediengerät (3) festgestellt wird, und unter Gefahrenbetriebsspannung gesetzt wird, wenn eine durch das Regalbediengerät (3) gebildete Gefährdung durch das Regalbediengerät (3) festgestellt wird, und
- **dass** die an die Schienenstrecke (1)/Stromversorgungsschiene (6) angelegte Spannung im Regalbediengerät (3) auf das Vorhandensein eines vordefinierten Charakteristikums hin untersucht wird, und die genannte Spannung nur dann an einen Fahrmotor (5) des Regalbediengeräts (3) weitergeleitet wird, wenn das festgestellte Charakteristikum das Vorliegen der Fahrspannung anzeigt, wobei als Charakteristika
a) die Fahrspannung ein vordefiniertes erstes Wechselsignal enthält und die Gefahrenbetriebsspannung dieses erste Wechselsignal nicht enthält oder
b) die Gefahrenbetriebsspannung ein vordefiniertes erstes Wechselsignal enthält und die Fahrspannung dieses erste Wechselsignal nicht enthält oder
c) die Fahrspannung ein vordefiniertes erstes Wechselsignal enthält und die Gefahrenbetriebsspannung ein vordefiniertes zweites Wechselsignal enthält.

3. Verfahren nach einem der Ansprüche 1 oder 2, **dadurch gekennzeichnet, dass** der Maximalwert der Gefahrenbetriebsspannung betragsmäßig unterhalb der Mindestfahrspannung liegt.

4. Verfahren nach einem der Ansprüche 1 bis 3, **dadurch gekennzeichnet, dass** die Gefahrenbetriebsspannung in der gleichen Polung wie die Mindestfahrspannung an die Schienenstrecke (1)/Stromversorgungsschiene (6) angelegt wird.

5. Verfahren nach einem der Ansprüche 1 bis 3, **dadurch gekennzeichnet, dass** die Gefahrenbetriebsspannung in einer zur Polung der Mindestfahrspannung entgegengesetzten Polung an die Schienenstrecke (1)/Stromversorgungsschiene (6) angelegt wird.

6. Verfahren nach einem der Ansprüche 1 bis 5, **dadurch gekennzeichnet, dass** die Gefahrenbetriebsspannung im Wesentlichen nur einen Gleichanteil aufweist.

7. Verfahren nach einem der Ansprüche 1 bis 5, **dadurch gekennzeichnet, dass** die Gefahrenbetriebsspannung im Wesentlichen nur einen Wechselanteil aufweist.

8. Verfahren nach einem der Ansprüche 1 bis 5, **dadurch gekennzeichnet, dass** die Gefahrenbetriebsspannung einen Gleichanteil und einen Wechselanteil aufweist.

9. Verfahren nach einem der Ansprüche 2 bis 8, **dadurch gekennzeichnet, dass** das genannte Wechselsignal sinusförmig verläuft oder als Digitalsignal ausgebildet ist.

10. Verfahren nach einem der Ansprüche 2 bis 9, **dadurch gekennzeichnet, dass** ein im Regalbediengerät (3) von der Fahrspannung ausgekoppelter Wechselspannungsanteil auf die Steuerspule eines Relais (25) geschaltet wird und dieses in einem Schaltzustand hält, wobei das Relais (25) zum Trennen der Fahrspannung vom Fahrmotor (5) eingerichtet ist.

11. Anordnung, umfassend
- eine Schienenstrecke (1),
- wenigstens eine entlang der Schienenstrecke (1) angeordnete Regalreihe,
- ein auf der Schienenstrecke (1) fahrbares Regalbediengerät (3) und
eine mit der Schienenstrecke (1) elektrisch verbundene Stromversorgung und/oder ein Stromversorgungsschiene (6), welche in Kontakt mit dem Regalbediengerät (3) steht,
**gekennzeichnet durch**
eine Fahrsteuerung, welche dazu eingerichtet ist, die Schienenstrecke
(1)/Stromversorgungsschiene (6) unter eine Gefahrenbetriebsspannung zu setzen, deren Gleichrichtwert/Effektivwert unter einem für das Bewegen des Regalbediengeräts (3) notwendigen Mindestgleichrichtwert/Mindesteffektivwert, jedoch über Null liegt, wenn eine durch das Regalbediengerät (3) gebildete Gefährdung festgestellt wird.

12. Anordnung nach Anspruch 11,
**dadurch gekennzeichnet, dass**
- die Fahrsteuerung (70..73), dazu eingerichtet ist, eine durch das Regalbediengerät (3) gebildete Gefährdung festzustellen und die Schienenstrecke (1)/Stromversorgungsschiene (6) im Normalbetrieb bei fehlender Gefährdung unter eine Fahrspannung und bei bestehender Gefährdung unter Gefahrenbetriebsspannung zu setzen, und
- eine Motorsteuerung (100..103) im Regalbediengerät (3) vorgesehen ist, welche dazu eingerichtet ist, die an die Schienenstrecke (1)/Stromversorgungsschiene (6) angelegte Spannung im Regalbediengerät (3) auf das Vorhandensein eines vordefinierten Charakteristikums hin zu untersuchen, und die genannte Spannung nur dann an einen Fahrmotor (5) des Regalbediengeräts (3) weiterzuleiten wird, wenn das festgestellte Charakteristikum das Vorliegen der Fahrspannung anzeigt, wobei als Charakteristika
a) die Fahrspannung ein vordefiniertes erstes Wechselsignal enthält und die Gefahrenbetriebsspannung dieses erste Wechselsignal nicht enthält oder
b) die Gefahrenbetriebsspannung ein vordefiniertes erstes Wechselsignal enthält und die Fahrspannung dieses erste Wechselsignal nicht enthält oder
c) die Fahrspannung ein vordefiniertes erstes Wechselsignal enthält und die Gefahrenbetriebsspannung ein vordefiniertes zweites Wechselsignal enthält.

## Claims

1. A method of operating a storage and retrieval unit (3), which can be moved on a rail line (1) and is supplied by a power supply (8) electrically connected to the rail line (1) and/or a power supply rail (6), by means of which at least one shelve row (2) disposed alongside the rail line (1) can be accessed,
**characterized in that**
the rail line (1)/power supply rail (6) is set to a risk mode voltage, whose rectified value/root mean square value is below a minimum rectified value/minimum root mean square value necessary to move the storage and retrieval unit (3) but above zero, if a risk posed by the storage and retrieval unit (3) is detected.

2. The method according to claim 1,
**characterized in that**
- the rail line (1)/power supply rail (6) is set to a traction voltage during normal operation if no risk posed by the storage and retrieval unit (3) is detected by the storage and retrieval unit (3), and is set to a risk mode voltage if a risk posed by the storage and retrieval unit (3) is detected by the storage and retrieval unit (3), and
- the voltage applied to the rail line (1)/power supply rail (6) is checked in the storage and retrieval unit (3) for the presence of a predefined characteristic, and said voltage is passed on to a traction motor (5) of the storage and retrieval unit (3) only if the detected characteristic indicates the presence of the traction voltage, wherein in terms of characteristics
a) the traction voltage contains a predefined first alternating signal and the risk mode voltage does not contain this first alternating signal or
b) the risk mode voltage contains a predefined first alternating signal and the traction voltage does not contain this first alternating signal or
c) the traction voltage contains a predefined first alternating signal and the risk mode voltage contains a predefined second alternating signal.

3. The method according to one of claims 1 or 2, **characterized in that** the absolute value of the maximum risk mode voltage lies below the minimum traction voltage.

4. The method according to one of claims 1 to 3, **characterized in that** the risk mode voltage is applied to the rail line (1)/power supply rail (6) with the same polarity as the minimum traction voltage.

5. The method according to one of claims 1 to 3, **characterized in that** the risk mode voltage is applied to the rail line (1)/power supply rail (6) with a polarity opposite the polarity of the minimum traction voltage.

6. The method according to one of claims 1 to 5, **characterized in that** the risk mode voltage has essentially only a direct component.

7. The method according to one of claims 1 to 5, **characterized in that** the risk mode voltage has essentially only an alternating component.

8. The method according to one of claims 1 to 5, **characterized in that** the risk mode voltage has a direct component and an alternating component.

9. The method according to one of claims 2 to 8, **characterized in that** said alternating signal is provided in the form of a sinusoidal signal or a digital signal.

10. The method according to one of claims 2 to 9, **characterized in that** an alternating voltage coupled out of the traction voltage in the storage and retrieval unit (3) is switched to the relay coil of a relay (25) and holds the latter in a switched state, wherein the relay (25) is configured to disconnect the traction voltage from the traction motor (5).

11. An arrangement, comprising
- a rail line (1),
- at least one shelve row disposed alongside the rail line (1),
- a storage and retrieval unit (3) which can be moved on the rail line (1) and
a power supply electrically connected to the rail line (1) and/or a power supply rail (6), which is in contact with the storage and retrieval unit (3),
**characterized in**
a drive control, which is configured to set the rail line (1)/power supply rail (6) to a risk mode voltage, whose rectified value/root mean square value is below a minimum rectified value/minimum root mean square value necessary to move the storage and retrieval unit (3) but above zero, if a risk posed by the storage and retrieval unit (3) is detected.

12. The arrangement according to claim 11,
**characterized in that**
- the drive control (70..73) is configured to detect a risk posed by the storage and retrieval unit (3) and to set the rail line (1)/power supply rail (6) to a traction voltage during normal operation in the absence of a risk and to a risk mode voltage in the presence of a risk, and
- a motor controller (100..103) is provided in the storage and retrieval unit (3), which is configured to check the voltage applied to the rail line (1)/power supply rail (6) in the storage and retrieval unit (3) for the presence of a predefined characteristic, and to pass said voltage on to a traction motor (5) of the storage and retrieval unit (3) only if the detected characteristic indicates the presence of the traction voltage, wherein in terms of characteristics
a) the traction voltage contains a predefined first alternating signal and the risk mode voltage does not contain this first alternating signal or
b) the risk mode voltage contains a predefined first alternating signal and the traction voltage does not contain this first alternating signal or
c) the traction voltage contains a predefined first alternating signal and the risk mode voltage contains a predefined second alternating signal.

## Revendications

1. Procédé d'exploitation d'un dispositif de desserte de rayonnages (3) mobile sur une voie ferrée (1) et alimenté par une alimentation électrique (8) reliée électriquement à la ligne à rails (1) et/ou par un rail d'alimentation électrique (6), au moyen duquel il est possible d'accéder à au moins une rangée de rayonnages (2) disposée le long de la voie ferrée (1),
**caractérisé en ce que**
la voie ferrée (1) / le rail d'alimentation électrique (6) sont soumis à une tension de service de sécurité dont la valeur de redressement/valeur efficace se trouve en dessous d'une valeur de redressement minimum/valeur efficace minimum nécessaire pour le déplacement du dispositif de desserte de rayonnages (3), mais supérieur à zéro, lorsqu'un risque représenté par le dispositif de desserte de rayonnages (3) est constaté.

2. Procédé selon la revendication 1,
**caractérisé en ce que**
- la voie ferrée (1)/ le rail d'alimentation électrique (6) est soumis en fonctionnement normal à une tension de déplacement lorsqu'aucun risque représenté par le dispositif de desserte de rayonnages (3) n'est constaté par le dispositif de desserte de rayonnages (3) et est soumis à une tension de service de sécurité lorsqu'un risque représenté par le dispositif de desserte de rayonnages (3) est constaté par le dispositif de desserte de rayonnages (3) et
- la tension appliquée dans le dispositif de desserte de rayonnages (3) à la voie ferrée (1)/ au rail d'alimentation électrique (6) est examinée afin de déterminer l'existence d'une caractéristique prédéfinie, et la tension mentionnée n'est transmise à un moteur de déplacement (5) du dispositif de desserte de rayonnages (3) que lorsque la caractéristique constatée montre l'existence de la tension de déplacement, moyennant quoi, en tant que caractéristiques
a) la tension de déplacement contient un premier signal alternatif prédéfini et la tension de service de sécurité ne contient pas le premier signal alternatif ou
b) la tension de service de sécurité contient un premier signal alternatif prédéfini et la tension de déplacement ne contient pas ce premier signal alternatif ou
c) la tension de déplacement contient un premier signal alternatif et la tension de service de sécurité contient un deuxième signal alternatif prédéfini.

3. Procédé selon l'une des revendications 1 ou 2, **caractérisé en ce que** la valeur maximale de la tension de service de sécurité se trouve, en valeur absolue, en dessous de la tension de déplacement minimale.

4. Procédé selon l'une des revendications 1 à 3, **caractérisé en ce que** la tension de service de sécurité est appliquée avec la même polarisation que la tension de déplacement minimale à la voie ferrée (1) / au rail d'alimentation électrique (6).

5. Procédé selon l'une des revendications 1 à 3, **caractérisé en ce que** la tension de service de sécurité est appliquée avec une polarisation opposée à la polarisation de la tension de déplacement minimale à la voie ferrée (1) / au rail d'alimentation électrique (6).

6. Procédé selon l'une des revendications 1 à 5, **caractérisé en ce que** la tension de service de sécurité présente globalement une seule composante continue.

7. Procédé selon l'une des revendications 1 à 5, **caractérisé en ce que** la tension de service de sécurité présente globalement une seule composante alternative.

8. Procédé selon l'une des revendications 1 à 5, **caractérisé en ce que** la tension de service de sécurité présente une composante continue et une composante alternative.

9. Procédé selon l'une des revendications 2 à 8, **caractérisé en ce que** le signal alternatif mentionné présente une forme sinusoïdale ou est conçu comme un signal numérique.

10. Procédé selon l'une des revendications 2 à 9, **caractérisé en ce qu'**une composante de tension alternative, découplée, dans le dispositif de desserte de rayonnages (3), de la tension de déplacement, est commutée vers la bobine de commande d'un relais (25) et maintient celui-ci dans un état de commutation, le relais (25) étant conçu pour la déconnexion de la tension de déplacement du moteur de déplacement (5).

11. Disposition comprenant
- une voie ferrée (1),
- au moins une série de rayonnages disposée le long de la voie ferrée (1),
- un dispositif de desserte de rayonnages (3) mobile sur la voie ferrée (1) et
une alimentation électrique reliée électriquement avec la voie ferrée (1) et/ou un rail d'alimentation électrique (6), qui est contact avec le dispositif de desserte de rayonnages (3),
**caractérisé par**
une commande de déplacement, qui est conçue pour soumettre la voie ferrée (1) / le rail d'alimentation électrique (6) à une tension de service de sécurité dont la valeur de redressement/valeur efficace se trouve en dessous d'une valeur de redressement minimale / valeur efficace minimale nécessaire pour le déplacement du dispositif de desserte de rayonnages (3), mais au-dessus de zéro, lorsqu'un risque représenté par le dispositif de desserte de rayonnages (3) est constaté.

12. Disposition selon la revendication 11,
**caractérisé en ce que**
- la commande de déplacement (70..73) est conçue pour constater un risque représenté par le dispositif de desserte de rayonnages (3) et soumettre la voie ferrée (1)/le rail d'alimentation électrique (6) en fonctionnement normal en l'absence de risque à une tension de déplacement et dans le cas d'un risque à une tension de service de sécurité et
- une commande de moteur (100..103) est prévue dans le dispositif de desserte de rayonnages (3), qui est conçue pour examiner la tension appliquée, dans le dispositif de desserte de rayonnages (3), à la voie ferrée (1)/au rail d'alimentation électrique (6) afin de déterminer l'existence d'une caractéristique prédéfinie et de ne transmettre la tension mentionnée à un moteur de déplacement (5) du dispositif de desserte de rayonnages (3) que lorsque la caractéristique constatée montre l'existence de la tension de déplacement, moyennant quoi, en tant que caractéristiques
a) la tension de déplacement contient un premier signal alternatif prédéfini et la tension de service de sécurité ne contient pas le premier signal alternatif ou
b) la tension de service de sécurité contient un premier signal alternatif prédéfini et la tension de déplacement ne contient pas ce premier signal alternatif ou
c) la tension de déplacement contient un premier signal alternatif et la tension de service de sécurité contient un deuxième signal alternatif prédéfini.
